Europäisches Patentamt

European Patent Office

Office européen des brevets

(19)

(11) Numéro de publication: **0 069 000**
**B1**

(12) # FASCICULE DE BREVET EUROPEEN

(45) Date de publication du fascicule du brevet:
09.04.86

(51) Int. Cl.⁴: **G 01 T 1/202**

(21) Numéro de dépôt: 82401130.8

(22) Date de dépôt: 21.06.82

(54) Scintillateur pour la réalisation de détecteurs très rapides de photons de grande énergie et à la réalisation de tomographes.

(30) Priorité: 23.06.81 FR 8112314

(43) Date de publication de la demande:
05.01.83 Bulletin 83/1

(45) Mention de la délivrance du brevet:
09.04.86 Bulletin 86/15

(84) Etats contractants désignés:
BE DE FR GB IT NL

(56) Documents cités:
WO - A - 81/00457
FR - A - 2 412 855
FR - A - 2 447 558

IEEE NUCLEAR SCIENCE 18, 1971, pages 202-204, New
York, USA M.R. FARUKHI et al.: "Barium fluoride as a
gamma ray and charged particle detector"
JOURNAL OF NUCLEAR MEDICINE, vol. 21, no. 2,
février 1980, pages 153-155, New York, USA R.
ALLEMAND et al.: "Potential advantages of a cesium
fluoride scintillator for a time-of-flight positron camera"

(73) Titulaire: **COMMISSARIAT A L'ENERGIE ATOMIQUE
Etablissement de Caractère Scientifique Technique et
Industriel, B.P. 510, F-75752 Paris Cedex 15 (FR)**

(72) Inventeur: **Allemand, Robert, Chemin de Bouffière,
F-38330 Saint Ismier (FR)**
Inventeur: **Laval, Michel, 17, Boulevard Maréchal Joffre,
F-38000 Grenoble (FR)**

(74) Mandataire: **Mongrédien, André et al, c/o
BREVATOME 25, rue de Ponthieu, F-75008 Paris (FR)**

## Description

La présente invention concerne un scintillateur. Elle s'applique notamment à la réalisation de détecteurs très rapides de photons de grande énergie, c'est-à-dire de photons X ou γ, et à la réalisation de tomographes.

On sait que l'un des moyens les plus précis connus dans l'état de la technique pour détecter l'instant de passage d'un photon est d'utiliser un scintillateur plastique associé à un photomultiplicateur rapide. Il existe de nombreux scintillateurs plastiques commercialement disponibles par exemple sous les noms de PILOT U ou NE 111. Tous ces scintillateurs plastiques ont la propriété d'émettre, lors de leur désexcitation suivant une interaction avec un photon γ, une impulsion lumineuse de constante de temps de l'ordre de 1,5 ns et dont l'intensité, c'est-à-dire le nombre total de photons de ladite impulsion, est proportionnelle à l'énergie du photon γ incident. Un rendement lumineux de l'ordre de 3000 à 4000 photons/MeV est courant avec de tels scintillateurs.

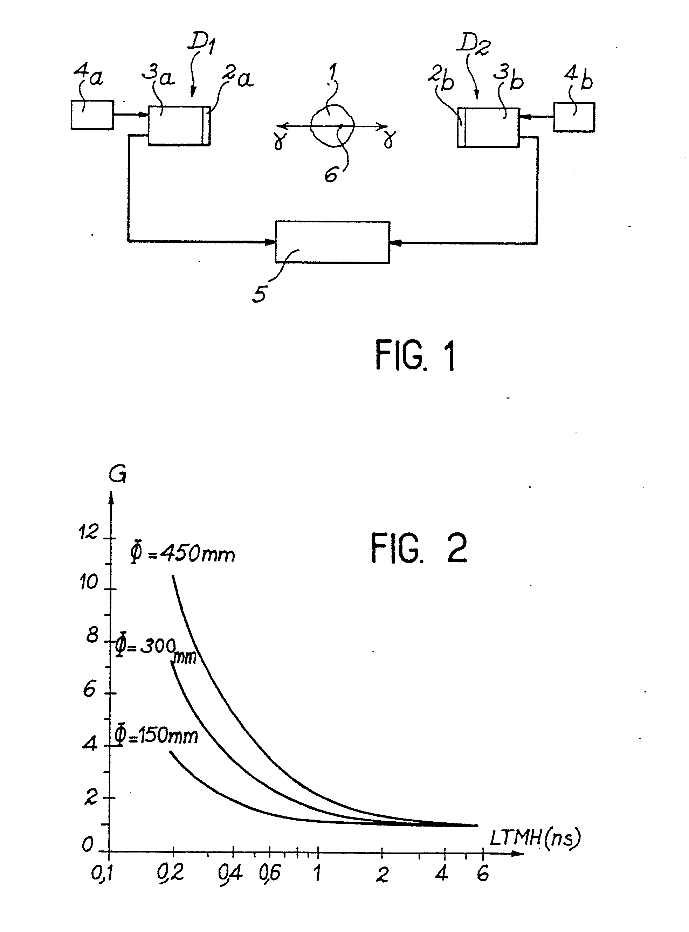

Pour évaluer les performances temporelles ou performances de mesures temporelles des scintillateurs plastiques, c'est-à-dire leurs performances de mesure de temps de vol, et pour comparer ces scintillateurs à d'autres scintillateurs, on peut utiliser un dispositif schématiquement représenté sur la figure 1.

Ce dispositif comprend deux détecteurs $D_1$ et $D_2$ en regard l'un de l'autre, comportant respectivement des scintillateurs plastiques minces 2a et 2b associés à des photomultiplicateurs rapides 3a et 3b. Ces derniers sont électriquement reliés respectivement à des moyens d'alimentation en haute tension 4a et 4b et sont également tous deux électriquement reliés à des moyens électroniques 5 d'amplification, de sélection et de comptage, réalisables par l'homme de l'art, et permettant en outre de mesurer l'écart temporel entre l'instant de détection d'un photon γ par le premier détecteur $D_1$ et l'instant de détection d'un autre photon γ par le second détecteur $D_2$, ces deux photons γ, chacun d'énergie 511 keV, résultant de l'annihilation d'un électron et d'un positon et étant émis simultanément et dans des directions opposées, à partir d'un point 6 d'un objet 1 auquel une substance émettrice de positons a été incorporée.

Les résultats obtenus pour lesdits écarts temporels fluctuent et présentent une distribution gaussienne caractéristique du type de scintillateur employé, pour une chaîne de mesure (photomultiplicateurs 3a, 3b et moyens électroniques 5) donnée. Cette distribution est elle-même caractérisée par sa largeur totale à mi-hauteur communément désignée par le sigle LTMH (ou FWHM dans les publications en langue anglaise).

Dans le cas de scintillateurs plastiques de 20 mm de diamètre et de 2 mm d'épaisseur, la LTMH est de l'ordre de 150 ps, avec un seuil en énergie tel que seuls les événements résultant d'effets photoélectriques soient sélectionnés et de l'ordre de 200 ps en prenant 90% des événements détectés, avec un seuil en énergie supérieur ou égal à 100 keV.

Le principal inconvénient d'un scintillateur plastique est que la matière plastique dont il est constitué est, d'une part, formée d'éléments dont les numéros atomiques sont faibles et a, d'autre part, une masse volumique également faible (de l'ordre de 1,1 à 1,2 g/cm³) du fait de sa compostition en atomes légers. Il en résulte que le principal effet qui gouverne les interactions des photons γ avec ladite matière plastique est l'effet Compton. Il n'existe alors pas de relation simple entre l'énergie d'un photon γ incident et l'énergie que ce dernier cède au scintillateur plastique ; toute spectrométrie du rayonnement γ est alors impossible. On est alors contraint soit de perdre un très grand nombre d'interactions en en prenant en compte que les rares photons γ interagissant par effet photoélectrique, soit d'analyser tous les photons ayant interagi sans pouvoir les sélectionner en fonction de leur énergie.

L'utilisation de scintillateurs constitués par de fluorure de baryum est divulguée notamment dans l'article de M.R. FARUKHI et al. paru dans IEEE NUCLEAR SCIENCE 18, 1971, pages 200–204 et intitulé "BARIUM FLUORIDE AS A GAMMA RAY AND CHARGED PARTICLE DETECTOR".

On sait également qu'un autre moyen parmi les plus précis connus dans l'état de la technique pour détecter l'instant de passage d'un photon, moyen notamment indiqué dans la demande de brevet français FR-A-2447558, est d'utiliser un scintillateur constitué de fluorure de césium CsF, matériau qui, d'une part, comporte des atomes de césium, élément de numéro atomique élevé (55), et qui, d'autre part, a une masse volumique importante (de l'ordre de 4,6 g/cm³) mais qui est sur deux points inférieur à la matière plastique : sa constante de temps de fluorescence est de l'ordre de 2,5 à 3 ns (au lieu de 1,5 ns environ pour le plastique) et son rendement de scintillation est de l'ordre de 1500 à 2000 photons/MeV (au lieu de 3000 à 4000 photons/MeV pour le plastique). En revanche, le fluorure de césium permet de réaliser une spectrométrie en énergie intéressante puisque sa résolution est de l'ordre de 30% avec des photons γ de 511 keV. Par ailleurs, en remplaçant les scintillateurs plastiques 2a et 2b du dispositif de la figure 1 par des scintillateurs en fluorure de césium de même géométrie, on obtient une LTMH de l'ordre de 220 à 300 ps selon la qualité du flourure de césium employé.

Les performances temporelles d'un scintillateur plastique sont donc meilleures que celles d'un scintillateur en fluorure de césium. Cependant, si l'on tient compte du fait que le pouvoir d'arrêt du fluorure de césium est bien supérieur à celui du plastique, on peut affirmer que dans l'état de la technique, à efficacité de détection égale, le fluorure de césium donne de meilleurs résultats temporels que le plastique.

Néanmoins, le fluorure de césium, notamment par comparaison avec le plastique, présente un inconvénient : c'est un matériau très difficile à obtenir du fait de son hygroscopie très importante qui est bien supérieure à celle de l'iodure de sodium dopé au thallium NaI(TI) par exemple. Ceci conduit à encapsuler de façon très étanche ce matériau de façon à pouvoir l'employer pour fabriquer des scintillateurs. Ces scintillateurs au fluorure de césium sont donc coûteux et peu commodes à utiliser.

La présente invention a pour but de remédier à ces inconvénients.

Elle a pour objet un scintillateur, fait d'un matériau constitué par du fluorure de baryum et destiné à la détection de photons de grande énergie. Ce détecteur est caractérisé dans la revedication 1.

L'invention s'applique par exemple à la réalisation de détecteurs très rapides de photons de grande énergie (X ou $\gamma$), notamment ceux qui sont prévus pour effectuer des mesures de temps de vol. Elle s'applique également à la réalisation de tomographes, notamment à positons, et en particulier à la réalisation de tomographes à positons et à temps de vol.

La présente invention sera mieux comprise à la lecture de la description qui suit, en référence aux dessins annexés sur lesquels :

— la figure 1 est une représentation schématique d'un dispositif permettant d'évaluer les performances temporelles de scintillateurs et a déjà été décrite, et

— la figure 2 est un graphique montrant les variations du gain (exprimé par un rapport de nombres d'événements mesurés) qu'apporte un tomographe à positons et à temps de vol, tel que celui qui est décrit dans la demande de brevet français FR-A-2447558, par rapport à un tomographe à positons classique, en fonction de la LTMH de la réponse de la chaîne de mesure de ces tomographes à une source ponctuelle de positons, pour différents diamètres de fantômes renfermant une distribution uniforme de substance émettrice de positons.

Un scintillateur en fluorure de baryum $BaF_2$ a des performances temporelles très proches de celles d'un scintillateur plastique et des avantages encore supérieurs à ceux d'un scintillateur en fluorure de césium, tout en conservant la simplicité d'emploi et le faible coût des scintillateurs plastiques. En effet, le numéro atomique du baryum (56) est légèrement supérieur à celui du césium (55) et il en est de même en ce qui concerne la masse volumique du fluorure de baryum (4,88 $g/cm^3$) vis-à-vis de celle du fluorure de césium (4,61 $g/cm^3$). Le pouvoir d'arrêt du fluorure de baryum vis-à-vis des photons X ou $\gamma$ est donc supérieur à celui du fluorure de césium. Par ailleurs, le fluorure de baryum est pratiquement insensible à l'eau ainsi qu'à de nombreux solvants organiques comme l'éthanol, l'éther éthylique, l'acétone, le méthanol et il peut s'usiner facilement, bien mieux que le verre dont il n'a pas la dureté, sans être très fragile. Enfin, en ce qui concerne les performances temporelles du fluorure de baryum, en utilisant le dispositif de la figure 1 dans lequel les scintillateurs plastiques 2a et 2b sont remplacés par des scintillateurs en flurorure de baryum de même géométrie, on obtient des réponses dont les LTMH sont d'environ 200 ps.

Ces valeurs s'expliquent par les caractéristiques de scintillation du fluorure de baryum : l'émission de ce matériau présente une composante rapide dont la constante de temps vaut environ 0,8 ns, avec un rendement lumineux de l'ordre de 1000 photons/MeV et une composante lente dont la constante de temps vaut environ 600 ns, avec un rendement lumineux de 3000 à 4000 photons/MeV. Ladite composante rapide est bien entendu utilisable dans un dispositif effectuant des mesures de temps de vol, pour avoir une bonne précision temporelle ; la résolution en énergie du fluorure de baryum peut être mise à profit comme celle du fluorure de césium, avec des résultats identiques ou meilleurs, suivant la façon dont on utilise ledit fluorure de baryum :

— on peut réaliser une analyse en énergie synchrone de l'analyse temporelle en ne prenant en compte que les 1000 photons/MeV de ladite composante rapide, ce qui conduit à une résolution en énergie de 30% avec des photons de 511 keV par exemple, résolution identique à celle obtenue avec le fluorure de césium ; — on peut également différer l'analyse en énergie, en attendant que la totalité de l'émission lumineuse soit terminée, soit 1,5 à 2 $\mu$s, et valider a posteriori l'événement analysé en conservant le résultat de l'analyse temporelle pendant quelques microsecondes dans un dispositif analogique ou numérique approprié. Dans ce cas, la résolution en énergie pour des photons de 511 keV est de l'ordre de 13 %, ce qui peut être très avantageux pour certaines applications comme la tomographie à positons où la présence de rayonnement diffusé est très gênante.

L'existence desdites composantes lente et rapide et les valeurs des constantes de temps qui leur sont associées ainsi que les mesures des spectres d'émission des scintillateurs au fluorure de baryum montrent que ladite composante lente est causée par des défauts du réseau cristallin de $BaF_2$ : impuretés chimiques incluses dans ledit réseau ou mauvais arrangement des atomes de baryum et de fluor. Ces défauts introduisent dans la bande interdite du fluorure de baryum, des niveaux intermédiaires qui ont pour effet de créer une émission de longueur d'onde supérieure à celle qui est associée à la composante rapide et de constante de temps élevée (0,6 $\mu$s). Des études ont en effet montré que ladite composante rapide correspond à une bande d'émission allant de 200 à 250 nm (2000 à 2500 Å) et présentant un maximum, centré sur 225 nm (2250 Å), et que ladite composante lente correspond à des longueurs d'onde supérieures à 250 nm (2500 Å) et pouvant aller, selon les échantillons de $BaF_2$, jusqu'à 600 nm (6000 Å), l'intensité de l'émission lumineuse présentant un maximum à environ 320 nm (3200 Å).

La transparence d'échantillons de $BaF_2$ dans le domaine de longueurs d'onde centré sur 225 nm (2250 Å) est parfaitement corrélée avec l'émission de ladite composante rapide. En effet, des échantillons présentant, dans leur spectre de transmission, une absorption à 225 nm (2250 Å) n'ont pas ou peu de composante rapide dans leur spectre d'émission. Ce phénomène est en relation directe :

    – avec la hauteur du pic d'absorption des échantillons : plus le pic d'absorption est important (à épaisseur des échantillons constante), moins il y a de photons rapidement émis ; et

    – avec l'épaisseur de l'échantillon : pour une qualité donnée (c'est-à-dire pour un taux d'impuretés donné), plus l'épaisseur est importante, moins il y a de photons rapidement émis.

L'émission "intrinsèque" de $BaF_2$ à 225 nm (2250 Å) existe donc pour tous les échantillons de ce matériau, mais peut être masquée en étant absorbée par des défauts du réseau de $BaF_2$ qui la convertissent en une émission de longueur d'onde supérieure en retardant ainsi l'émission de lumière.

Une amélioration de la pureté du fluorure de baryum (suppression d'impuretés chimiques (notamment le fer), de défauts structuraux du réseau,...) peut donc permettre de renforcer l'importance de ladite composante rapide par rapport à ladite composante lente dans l'émission lumineuse dudit fluorure de baryum.

Ce dernier, ainsi purifié, peut être employé pour fabriquer des scintillateurs pour détecteurs destiné à être utilisés dans les tomographes, notamment les tomographes à positons et plus particulièrement les tomographes à positons et à temps de vol tels que celui que décrit la demande de brevet français FR-A-2447558. Cette dernière montre l'avantage que présentent les tomographes à positons et à temps de vol par rapport aux tomographes à positons classiques, en réduisant la longueur ou distance "d'épandage" et en diminuant de ce fait le bruit contenu dans les images reconstruites, pour un même nombre d'événements détectés. Ledit avantage apparaît également en comparant le nombre d'événements détectés permettant d'aboutir à une image de même qualité avec un tomographe à positons et à temps de vol qu'avec un tomographe à positons classique.

Les courbes de la figure 2 donnent les variations du gain G (exprimé par le rapport des nombres d'événements détectés) qu'apporte un tomographe à positons et à temps de vol, en fonction de la LTMH (exprimée en ns) de la réponse de la chaîne de mesure du temps de vol à une source ponctuelle de positons, ceci pour différents diamètres de fantômes renfermant une distribution uniforme de substance émittrice de positons. Ces courbes montrent l'intérêt que présente l'amélioration de ladite LTMH, c'est-à-dire une réduction de celle-ci. En effet, plus cette LTMH est faible, plus le gain mentionné ci-dessus est élevé et donc moins grande est la quantité de traceur à injecter à un patient à examiner avec un tomographe à positons et à temps de vol, par rapport à celle qui devrait lui être injectée s'il était examiné avec un tomographe à positons classique. L'utilisation d'un scintillateur en fluorure de baryum, purifié comme indiqué plus haut, permet précisément d'avoir une LTMH,c'est-à-dire une erreur dans les mesures de temps de vol, au moins 1,3 fois plus faible que celle obtenue en utilisant un scintillateur en fluorure de césium, pour des scintillateurs de même géométrie.

Outre cet avantage "temporel", le fluorure de baryum a un coefficient d'atténuation linéaire légèrement supérieur à celui du fluorure de césium, du fait que le baryum a un numéro atomique supérieur à celui du césium et que la masse atomique de $BaF_2$ est plus importante que celle de CsF. Cet autre avantage contribue à augmenter la sensibilité d'un tomographe à positons et à temps de vol de 5 à-10%. De plus, comme on l'a déjà indiqué, le fluorure de baryum n'a aucune affinité pour l'eau, contrairement au fluorure de césium qui doit être encapsulé de façon parfaitement hermétique pour permettre la réalisation de scintillateurs qui sont donc coûteux et d'emploi peu commode. Le fait que le nouveau matériau pour scintillateurs que constitue le fluorure de baryum ne nécessite pas d'encapsulation, permet de réduire notablement la surface perdue entre les scintillateurs et conduit à un gain supplémentaire de sensibilité de l'ordre de 15% pour un tomographe à positons et à temps de vol.

Le fluorure de baryum, purifié comme on l'a indiqué plus haut, apparaît donc comme supérieur au fluorure de césium en ce qui concerne ses performances temporelles, son efficacité de détection, sa commodité d'emploi et le coût de fabrication de scintillateurs. Employé pour la fabrication de détecteurs pour tomographes à positons et à temps de vol, il permet de réduire la quantité de traceur à injecter à un patient à examiner d'un facteur au moins égal à 1,5, comparativement à celle qui est nécessaire avec les tomographes du même type utilisant des détecteurs réalisés avec du fluorure de césium, et ce pour une même qualité d'images.

## Revendications :

1. Scintillateur fait d'un matériau constitué par du fluorure de baryum et destiné à la détection de photons de grande énergie, caractérisé en ce que ledit matériau a été purifié de façon à offrir une transmission plus particulièrement dans le domaine des longueurs d'onde comprises entre 200 et 250 nm (2000 Å et 2500 Å) et à présenter, sour excitation par lesdits photons de grande énergie, une émission de lumière ayant, outre une composante lente correspondant à des longueurs d'onde supérieures à 250 nm (2500 Å), une composante rapide dans le domaine des longueurs d'onde comprises entre 200 et 250 nm (2000 Å et 2500 Å), avec une constante de temps d'environ 0,8 ns.

2. Application du scintillateur selon la revendication 1 à la réalisation de détecteurs très rapides de photons de grande énergie pour effectuer des mesures de temps de vol de photons.

3. Application du scintillateur selon la revendication 1 à la réalisation de tomographes.

4. Application selon la revendication 3, caractérisée en ce qui lesdits tomographes sont des tomographes à positons.

5. Application selon la revendication 4, caractérisée en ce que lesdits tomographes sont en outre à temps de vol.

## Patentansprüche

1. Szintillationskristall, der aus einem aus Bariumfluorid bestehenden Material hergestellt und zum Nachweisen von Photonen hoher Energie bestimmt ist, dadurch *gekennzeichnet,* daß das Material gereinigt worden ist derart, daß es eine Transmission insbesondere in dem Wellenlängenbereich zwischen 200 und 250 nm (2000 Å und 2500 Å) zeigt und bei Anregung durch die Photonen hoher Energie eine Lichtemission aufweist, die neben einem langsamen Anteil, der Wellenlängen oberhabl von 250 nm (2500 Å) entspricht, einen schnellen Anteil in dem Wellenlängenbereich zwischen 200 und 250 nm (2000 Å und 2500 Å) mit einer Zeitkonstanten von ungefähr 0,8 ns aufweist.

2. Verwendung des Szintallationskristalls nach Anspruch 1 bei der Herstellung von Detektoren für sehr schnelle Photonen hoher Energie, um Laufzeitmessungen der Photonen durchzuführen.

3. Verwendung des Szintillationskristalls nach Anspruch 1 bei der Realisierung von Tomographen.

4. Verwendung nach Anspruch 3, dadurch *gekennzeichnet,* daß die Tomographen Positron-Tomographen sind.

5. Verwendung nach Anspruch 4, dadurch *gekennzeichnet,* daß die Tomographen ferner solche mit Laufzeit sind.

## Claims:

1. Scintillator formed from a material comprising barium fluoride and adapted for the detection of high energy photons, characterized in that said material has been purified whereby to provide more particularly a transmission in the wavelength region between 200 and 250 nm (2000 Å to 2500 Å) and to provide, when excited by said high energy photons, light emission having, apart from a slow component corresponding to wavelengths greater than 250 nm (2500 Å), a fast component in the wavelength region between 200 and 250 nm (2000 Å and 2500 Å), with a time constant of around 0.8 ns.

2. Application of the scintillator according to Claim 1 to the formation of very fast-acting sensors for high energy photons to permit measurement of the time of flight of the photons.

3. Application of the scintillator according to Claim 1, to the production of tomographs.

4. Application according to Claim 3, characterized in that said tomographs are position tomographs.

5. Application according to Claim 4, characterized in that said tomographs additionally measure time of flight.

FIG. 1

FIG. 2